# EUROPEAN PATENT APPLICATION

(11) **EP 3 591 300 A1**
(43) Date of publication of application: **08.01.2020**
(21) Application number: 18181285.0
(22) Date of filing: 02.07.2018
(51) Int. Cl.: F24F 5/00, F28D 20/00, F28D 20/02

(54) **PRESSURISED, LOW TEMPERATURE, SINGLE OR MULTI-PACKED BED COLD STORAGE AND DISTRIBUTION SYSTEM**

(71) Applicant: Albakri, Sami Abdulrahman A., 2342 -6233 Jeddah (SA)
(72) Inventor: Albakri, Sami Abdulrahman A., 2342 -6233 Jeddah (SA)
(74) Representative: LifeTech IP Spies & Behrndt Patentanwälte PartG mbB

(57) **Abstract**

This invention is related to pressurised, low temperature, single or multi-packed bed cold storage and distribution system. The system has been developed for cooling purposes as well as energy storage system for such as solar panels.

This invention is related to a pressurised, low/ultra-low temperature, multi-packed bed cold storage system for central air conditioning, other cooling requirements or as energy storage system for renewable energy sources comprising a chiller (cooling source) for cooling the heat transfer fluid (HTF) to low or ultra-low temperature, a multi-packed bed system (cold storage) for storing coldness, the HTF compressor enabling the circulation of the HTF in the closed circuit that operated under high-pressure and the heat exchanger coil (delivering of coldness to user).

The system can be charged during nights, off-peak hours or surplus electricity production from renewable sources and discharged during peak hours. Furthermore, the system can be discharged with much higher mass flow rate of the HTF compared to the charging phase, which offers significant saving in investment and operation costs. This is due to the fact that the charging phase can be performed for several hours using a small size chiller with low or ultra-low temperature of about -50 °C (depending on design conditions) during off-peak hours. During the peak hours, the discharging phase is achieved with higher HTF mass flow rate with a temperature of 16 °C (depending on design conditions) for purpose of the central air conditioning or other cooling requirements.

## Description

### TECHNICAL FIELD OF THE INVENTION

This invention is related to pressurised, low temperature, single or multi-packed bed cold storage and distribution system. The system has been developed for cooling purposes as well as energy storage system for such as solar panels.

### BACKGROUND OF THE INVENTION (PRIOR ART)

### MOTIVATION

In many countries without abundant natural resources suitable for the use of large hydro or geothermal energy, electricity generation is mainly based on thermal power plants and will continue to do so in the foreseeable future, considering plant lifetime of up to 40 years. It can be distinguished between conventional power plants that use fuels such as natural gas, petroleum or solid fuels (coal, biomass, municipal waste, refuse derived fuel or even dried sewage sludge) and nuclear power plants that use nuclear fuels such as uranium-235. In conventional thermal power plants, the fossil fuel is combusted, producing a high temperature heat flow. Part of this flow is converted into mechanical energy, driving a steam turbine coupled with an electrical generator and the rest is dissipated from the system into the atmosphere as residual heat.

In recent years, scientific researches confirm that human activities such as burning fossil fuels contribute to global climate change. The energy sector in terms of conversion of fossil fuels for electricity generation considers as a major source of carbon dioxide emissions. In order to avoid further increase in carbon dioxide concentration and accordingly the average global temperature of earth, a drastic reduction in CO₂ emissions is required. Lower CO₂ emissions can be achieved by increasing the use of renewable energy sources. However, the current and future growing demand for electrical energy worldwide cannot completely be covered through the renewables. Besides the efficiency increase of thermal power plants, an additional way to reduce CO₂ emissions is the ability of end users to reduce their electrical loads. Energy efficiency efforts in industries, large buildings and households target lighting, heating and cooling systems and major appliances, all drawing from the power grid and running up the utility bill.

A fluidized bed system is a bulk of solid particles located in a vertical vessel and a fluid (gas or liquid) streams from the bottom via a porous plate or nozzles. The emerging forces from fluid to particles cause a fluidization condition and offer an effective way for gas-solid interaction. The fluidized bed system is characterised by several advantages, including simple construction, suitability for large-scale operation, high heat and mass transfer rates between phases (fluid and solid), possible operation over a wide range of geometrical and mechanical properties of particles and continuous operation with the possibility of solid transfer in and out of the system. Different variables can influence the fluidization behaviour such as the particle size distribution and the superficial fluidization velocity. When the superficial fluidization velocity is below the minimum fluidization velocity, the particles remain stationary packed since the gas flows through the interstitial space of the particles. In this case, the bed behaves like a porous medium (generally known as fixed bed or packed bed). If the superficial fluidization velocity exceeds the minimum fluidization velocity, the bed becomes inhomogeneous and bubbles can be clearly distinguished. In this regime, the coalescence and breakup of bubbles occur frequently. If the superficial fluidization velocity exceeds the solid terminal velocity (i.e. the velocity that the particle reaches in free fall due to gravity), the particles start moving faster and form streamers and clusters. Here, the overall structure of the bed transforms to be more homogeneous. At higher superficial fluidization velocity, the particles are completely entrained. The entire bed becomes as lean gas-solid suspension. Besides the superficial fluidization velocity, the fluidization behaviour of the gas-solid flow depends also on the mechanical and physical properties of particles as well as the difference between solid and fluid densities.

Packed bed (fixed bed) rectors are versatile and frequently used in chemical processing applications, including adsorption, distillation, separation processes and catalytic reactions. A new application field for packed beds is the thermal energy storage systems that are of particular interest to maintain security of supply and to improve flexibility of the future electricity system due to the increased expansion of intermittent electricity generation in the energy grid, notable wind power and photovoltaics. The packed bed thermal energy storage system consists of solid material (bulk solid fraction is ca. 0.6), through which the heat transfer fluid is circulated. The bulk solid fraction (random-close packing limit) defines the maximum volumetric void fraction of the solid in the bed. This parameter is independent of the grain size for regular spheres packing (monodisperse system) and depends on the particle size distribution and the particle shape for polydisperse systems with non-spherical particles.

The thermal energy (heat) can be stored in the packed beds as sensible heat, latent heat or chemical energy and used hours, days or months later. During the charging phase, the hot heat transfer fluid (usually air) flows into the bed from top to bottom to heat the storage solid material, while the cold heat transfer fluid flows into the bed from bottom to top during the discharging phase. In case of the chemical energy storage system, the thermal energy is stored/released using chemical reactions. The chemical energy storage requires endothermic chemical reactions that need to be fully reversible for recovering the potential energy stored in molecular bindings. The latent heat storage systems use the enthalpy difference required for material phase change, rendering the choice of suitable materials according to temperature crucial. The store/release of the thermal energy is generally based on phase change from solid to liquid and vice versa. The packed bed latent heat thermal energy storage systems can be applied to solar thermal energy storage, low temperature storage systems and waste heat recovery systems. In sensible thermal energy storage systems, the thermal energy is stored/released by increasing/decreasing the temperature of the solid material that filled in an insulated container. The sensible rock-bed storage system consists of a quartzite-rock bed that is charged with a hot air flow and discharged by cold air counter flow. For such systems, the discharge temperature typically decreases with time and the use of a randomly packed bed results in a considerable pressure loss, but the technological and economical aspects make sensible heat storage systems superior. Compared to other thermal energy storage systems, the sensible thermal energy storage systems have several advantages, including high energy density, good heat transfer between heat transfer fluid and packed bed material, mechanical and chemical stabilities of the used solid particles, low thermal losses, low investment and operation costs and unlimited numbers of charging and discharging cycles.

In this patent, the sensible thermal energy storage system is used to store the cooling energy (coldness), instead of the thermal energy (heat). A patent search has been performed and the publications, which can be related to the present invention, are evaluated below:
There are disclosures about "cooling thermal energy storage" in the internet web site ("Riverside") below. (http://www.energydepot.com/rpucom /library/hvac015.asp)

In this web site, the disclosure describes a cooling thermal energy storage using ice as a storage medium. The present invention is not using ice as a storage medium.

The document CA2830125A1 describes an improved thermal storage system. The differences from the present invention are:
- The system is used to store the thermal energy and not used for the cold storage
- The system is an open circuit, while this invention has a closed system during charging and discharging phases
- The temperature of the HTF during the discharge phase decreases since no bypass is used. In the present invention, bypass valves are used in order to maintain a constant temperature during charging and discharging phases
- The process of the present invention has also different distribution systems during charging and discharging phases

The document CN103075907B describes a single storage system for thermal or cold storage under high pressure. No information regarding the multi-packed bed system and the charging and discharging phases are provided in this document.

The document JP2013127245A discloses an enhanced cooling system with a possible heat recovery system. The process in the present invention is fully different since the system can be charged during off-peak hours and discharged during peak hours.

The document KR2014087697A discloses no information regarding the multi-packed bed system as well as the charging and discharging phases.

The document having the title of "Integrated Thermal Energy Storage for Cooling Applications"; (Final Report, Prepared for: New York State Energy Research and Development Authority Albany, NY; Robert Carver Senior Project Manager; Prepared by: Optimized Thermal Systems, Inc. Beltsville, MD Cara Martin COO Paul Kalinowski Thermal Systems Engineer; Prepared in Partnership with: Johnson Controls, Inc. Bitzer Scroll, Inc.; June 2017) describes the possible use of water as storage medium.

The document WO2017151606A1 describes a thermal storage system. The differences from the present invention are:
- The system in the document is used to store the thermal energy and not used for the cold storage
- The system is an open circuit, while the present invention has a closed system during charging and discharging phases
- The temperature of the heat transfer fluid (HTF) during discharging phase is controlled by changing the HTF mass flow rates in all modules. This process has fully different distribution system during charging and discharge phases

### BRIEF DESCRIPTION AND OBJECTS OF THE INVENTION

The invention, described below for cold storage, relates to a novel process that consists of a chiller, single or multi-packed bed system, a compressor and a heat exchanger coil. The applied chiller (based on refrigeration cycle or other process) provides a low temperature of about -50 °C (the temperature could be higher or lower depending on the type of the used chiller and design conditions).

The single or multi-packed bed system may have at least one packed bed. It may comprise two or more packed beds. Each one is randomly filled with monodisperse or polydisperse solid particles (made of e.g. aluminium oxide, steel, stone, rock, ceramic, plastic or any suitable solid materials), small objects like Raschig rings, phase change material (PCM) or else it can be designed structured packing.

The compressor enables the circulation of the heat transfer fluid (e.g. carbon dioxide, nitrogen, dried air or other suitable gases) in the circuit. The drive power required for the compressor is supplied to the compressor shaft by an electric motor, for example. The heat exchanger coil delivers cooling to the end users.

During nights, off-peak hours or surplus electricity production from renewable sources, the system is charged by compressing the heat transfer fluid (HTF) and cools it down by the chiller. The cold flow enters the multi-packed bed system from the bottom and leaves from the top (vice versa is also possible). Accordingly, the temperature of the solid particles in the multi-packed bed system deceases and the temperature of the HTF increases. The hot heat transfer fluid leaves the multi-packed bed system and enters the compressor that compensates the pressure drop, arising in the circuit. The system is pressurised and the operation pressure is 15 bar (the operation pressure could be higher or lower depending on design conditions). During days or peak hours, the chiller is switched-off and the compressor circulates the heat transfer fluid between the multi-packed bed system and the heat exchanger coil.

### BRIEF DESCRIPTION OF THE FIGURES

The figures used for better describing the pressurised, low temperature, single or multi-packed bed cold storage and distribution system developed by the invention and descriptions of said figures are provided below:
- Figure 1:: Schematic representation of process components
- Figure 2:: Simplified process layout of the system
- Figure3:: Schematic view of charging process (in general) without bypass
- Figure3.1:: Temperature change at point (0) and (1) during charging without bypass
- Figure 4:: Schematic view of charging process (in general) with bypass
- Figure 4.1:: Temperature change at point (0) and (1) during charging with bypass
- Figure 5:: Schematic view of charging phase sequences in case of three packed beds connected together in parallel

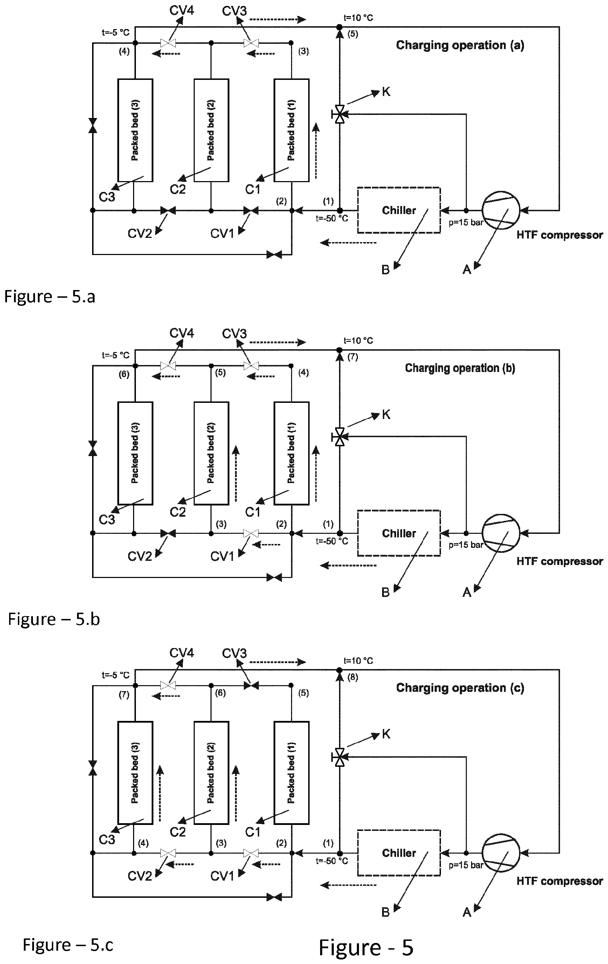

- Figure 5.a:: Schematic view of charging phase sequences in case of three packed beds connected together in parallel (charging first packed bed)
- Figure 5.b:: Schematic view of charging phase sequences in case of three packed beds connected together in parallel (charging first and second packed beds)
- Figure 5.c:: Schematic view of charging phase sequences in case of three packed beds connected together in parallel (charging second and third packed beds)

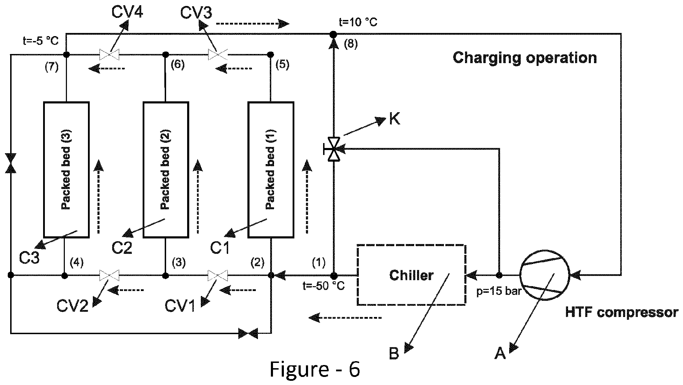

- Figure 6:: Schematic view of charging sequences in case of all packed beds connected together in parallel

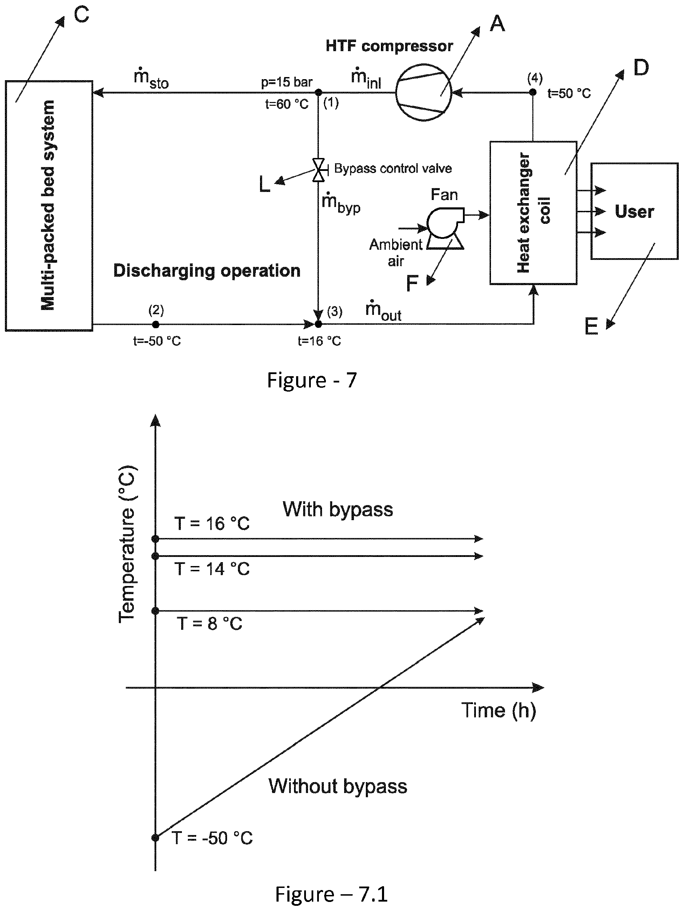

- Figure 7:: Schematic view of discharging process (in general) with bypass
- Figure 7.1:: Temperature change at point (0) and (1) during charging with and without bypass

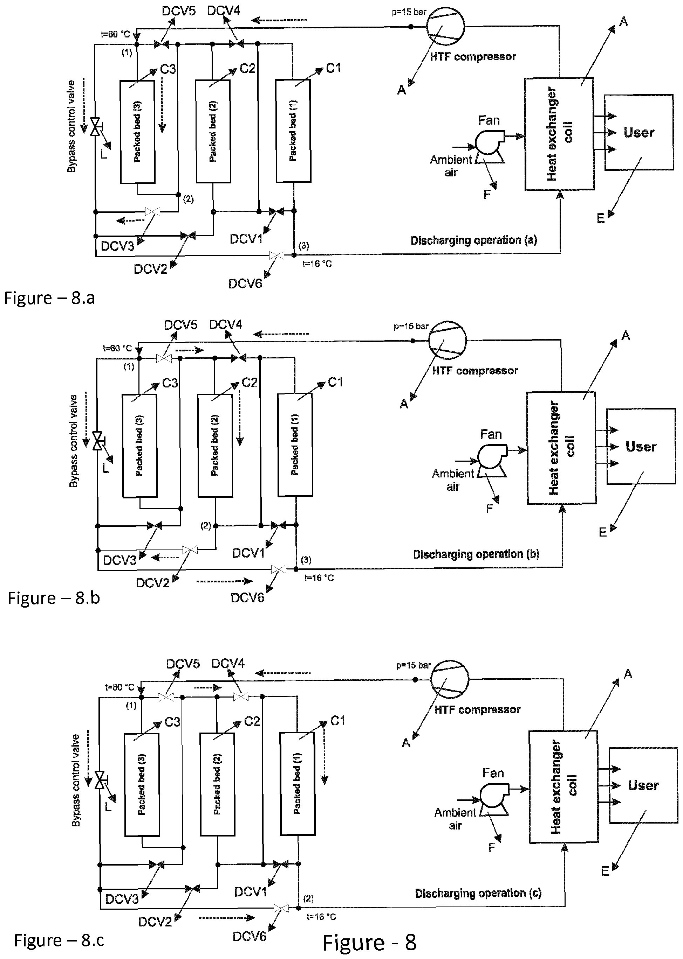

- Figure 8:: Schematic view of sequence of discharging phase (in general)
- Figure 8.a:: Schematic view of discharging phase sequences in case of three packed beds connected together in parallel (discharging third packed bed)
- Figure 8.b:: Schematic view of discharging phase sequences in case of three packed beds connected together in parallel (discharging second packed bed)
- Figure 8.c:: Schematic view of discharging phase sequences in case of three packed beds connected together in parallel (discharging first packed bed)

### DESCRIPTIONS OF THE COMPONENTS/SECTIONS/PARTS FORMING THE INVENTION

In order to better describe the pressurised, low temperature, single or multi-packed bed cold storage and distribution system developed by this invention, reference numbers are individually assigned to the parts and components in the figures and description of each of these numbers are provided below:
A- Heat Transfer Fluid (HTF) Compressor
B- Chiller
C- Multi-packed bed system
C1- First packed bed
C2- Second packed bed
C3- Third packed bed

D- Heat Exchanger Coil
E- User
F- Fan for Heat Exchanger
G- Evaporator
H- Compressor for Chiller
I- Condenser
J- Expansion Valve
K- Bypass control valve (charging)
L- Bypass control valve (discharging)

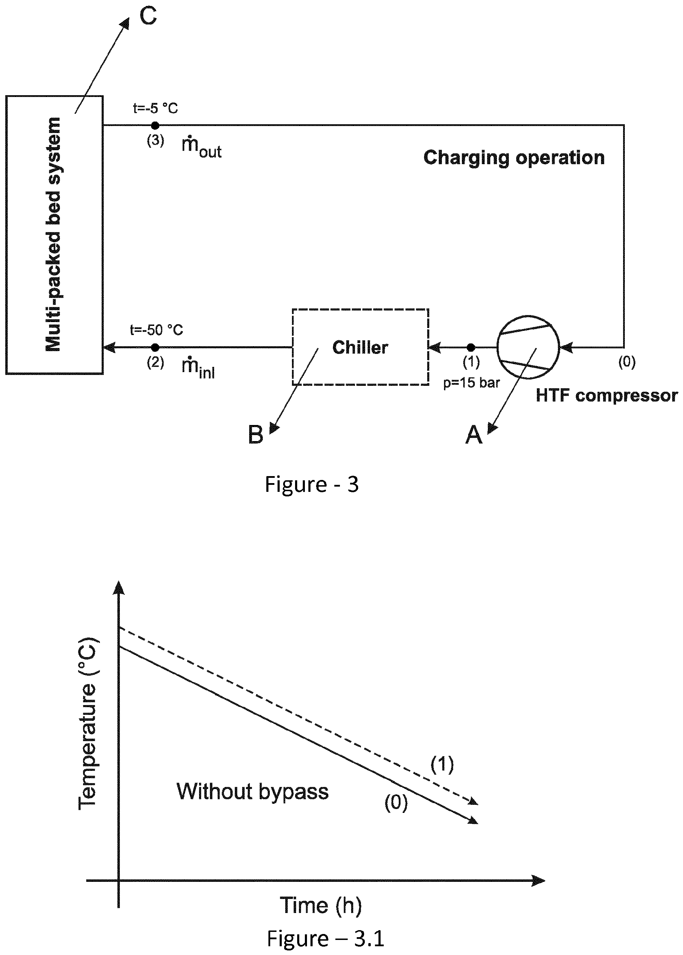

0- The point at the inlet of HTF Compressor (Figure 3)
1- The point between HTF Compressor and Chiller by charging (Figure 3)
2- Entry of first packed bed by charging (Figure 3)
3- Exit of first packed bed by charging (Figure 3)

CV1: Control Valve between entries of first and second packed beds (Figure 5 in charging)
CV2: Control Valve between entries of second and third packed beds (Figure 5 in charging)
CV3: Control Valve between exits of first and second packed beds (Figure 5 in charging)
CV4: Control Valve between exits of second and third packed beds (Figure 5 in charging)
DCV1: Discharge Control Valve at the exit of first packed bed (C1) (Figure 8 in discharging)
DCV2: Discharge Control Valve at the exit of second packed bed (C2) (Figure 8 in discharging)
DCV3: Discharge Control Valve at the exit of third packed bed (C3) (Figure 8 in discharging)
DCV4: Discharge Control Valve in between the inlets of first and second packed beds (C1 and C2) (Figure 8 in discharging)
DCV5: Discharge Control Valve in between the inlets of second and third packed beds (C2 and C3) (Figure 8 in discharging)
DCV6: Discharge Control Valve between exits of packed beds (C1, C2 and C3) and heat exchanger coil (D) (Figure 8 in discharging)

### PROCESS COMPONENTS

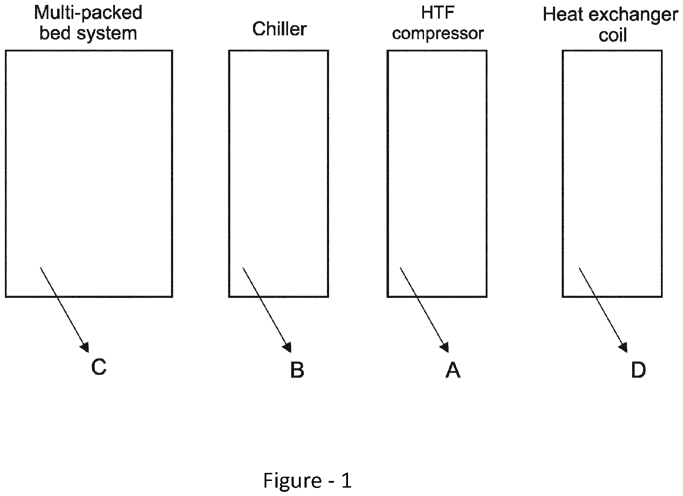

The process consists of a multi-packed bed system, a chiller, a heat exchanger coil and a HTF compressor (see Figure 1).
1) **Multi-packed bed system:** This system comprises at least one packed bed or more connected to each other for storing coldness. Each packed bed is randomly filled with filling materials. Filling materials may be monodisperse and/or polydisperse solid particles. The filling material may be made of e.g. aluminium oxide, steel or ceramic or *other solid particles that include fluid inside such as phase change material (PCM)* and/or small objects like Raschig rings and/or anything else that can be designed as filling material. The filling material may be mixture of two or more of these materials. The multi-packed bed system may be placed outside of the buildings vertically or horizontally and/or in the ground (underground) and/or may also be movable.
2) **Chiller:** It cools the heat transfer fluid (HTF) to low or ultra-low temperature.
3) **Heat exchanger coil:** It delivers cooling to the end users.
4) **HTF compressor:** The compressor enables the circulation of the HTF (e.g. carbon dioxide, nitrogen, dried air or other suitable gases) in the closed circuit that operated under high-pressure.

### PROCESS DESCRIPTION

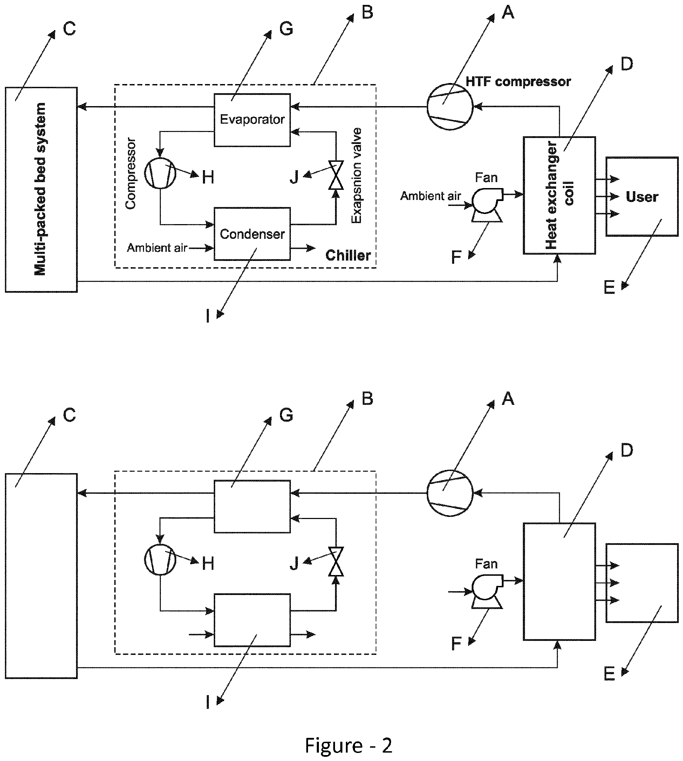

Figure 2 shows a simplified process layout of the pressurised, low/ultra-low temperature, multi-packed bed cold storage system for central air conditioning, other cooling requirements or as energy storage system for renewable energy sources. Four components are required for this process: the chiller (cooling source) (B), the multi-packed bed system (cold storage) (C), the HTF compressor (pressure drop compensation) (A) and the heat exchanger coil (delivering of coldness to user) (D).

Chiller (B) comprises, Evaporator (G), Compressor for Chiller (H), Condenser (I) and Expansion Valve (J). It is well-known technology.

In the process of the invention, some setpoints (for temperatures and operation pressure) must be defined according the design conditions and user requirements. These are:
- Charging setpoint temperature at the outlet of chiller (Setpoint temperature for chiller),
- Setpoint temperature at the exit of every packed bed (Setpoint temperature for bottom of each packed bed during charging mode),
- Setpoint temperature at the inlet of the HTF compressor,
- Setpoint operation pressure of the HTF Compressor (setpoint pressure),
- Setpoint temperature at the heat exchanger for delivering cooling to the user (Setpoint temperature of the heat exchanger for cooling purposes).

These temperature and pressure setpoints are set to predetermined values before initiating the system.

During charging phase, illustrated in Figure 3, the heat transfer fluid is compressed by the HTF compressor (A) (point (1)). The pressurized HTF enters the chiller (B), where its temperature decreases to about -50 °C (temperature of the HTF could be higher or lower - here the setpoint temperature for chiller is assumed as -50 °C) (point (2)). Then, the cold and pressurized HTF enters the multi-packed bed system (C) from the bottom and exit from the top. At the outlet of the multi-packed bed systems (point (3)), the HTF flows to the HTF compressor. The charging phase is stopped, when the temperature of the HTF at the top of the multi-packed bed system (point (3)) reaches a certain value (here is -5 °C, but could be higher or lower - here the setpoint temperature at exit of every packed bed is assumed as -5 °C). It should be mentioned that the exit HTF temperature at point (3) is at the start is high and declines over the course of the charging phase due the temperature decrease in the cold storage system. This means, the HTF compressor and the chiller will work under different performances by the reason of different HTF temperatures at the inlet of compressor (A). In Figure 3.1, it can be noticed that the temperature of HTF fluid will decrease at the points (0) and (1) during charging phase.

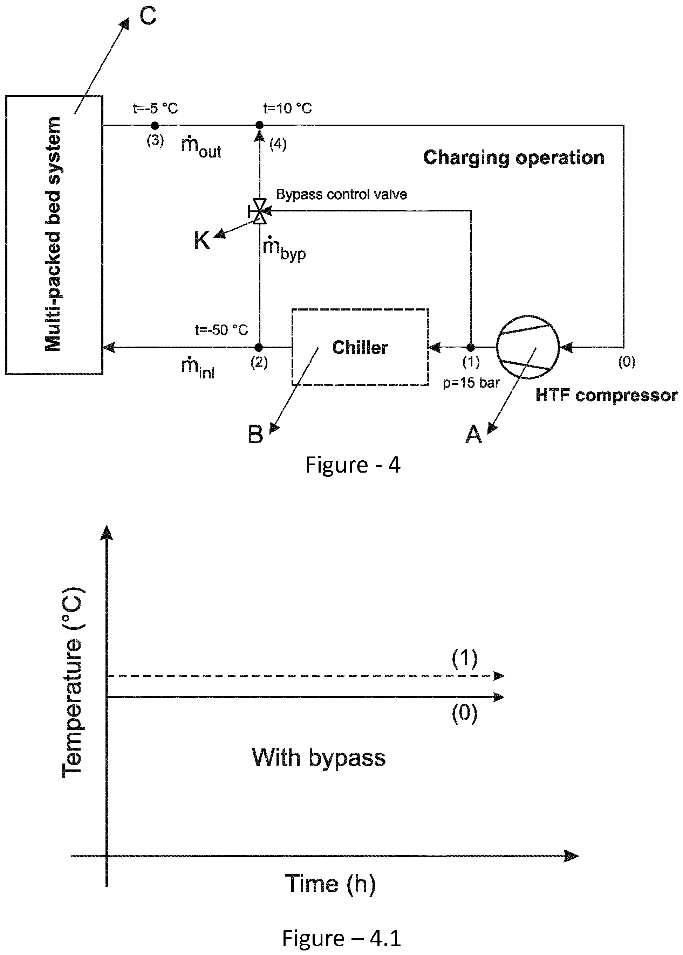

The exit HTF temperature can be maintained at a constant value (here is 10 °C, but could be higher or lower) during charging phase, if part of the mass flow rate at point (1 + 2) is bypassed to point (4) (see Figure 4). A control circuit is required in order to adjust the mass flow rate through the bypass control valve (K). In Figure 4.1, it is seen that the temperature of the HTF fluid will be kept constant at the points (0) and (1) using the bypass control valve (K).

The pressure drop during the charging phase is related mostly to the pressure losses in the multi-packed bed system. In order to reduce the pressure losses, it is favourable to increase the operation pressure (setpoint pressure) (here, the operation pressure is 15 bar, but it could be higher or lower). If higher operation pressure is applied, then the pressure losses in the multi-packed bed system will be low. Increasing the operation pressure will result in increasing the wall thickness of the multi-packed bed system and all related components. The HTF mass flow rate during charging phase depends on the chiller capacity to achieve the charging temperature (here is -50 °C) and to compensate the pressure losses in the system.

Figure 5 shows the charging phase sequences in case of three packed beds connected together in parallel:
- Charging the first packed bed (C1) (points 1, 2, 3, 4 to 5), while the bypass valve controls the setpoint temperature of the HTF at the inlet of the HTF compressor as constant (here it is 10 °C). At this stage (Figure 5.a), the control valve between entries of first and second packed beds (CV1) and the control valve between entries of second and third packed beds (CV2) are closed. The control valves between exits of first and second packed beds (CV3) and between the exits of second and third packed beds (CV4) are opened. Therefore, the HTF flows via the points (1), (2), (3), (4) and (5). The HTF temperature (setpoint temperature) at the inlet of compressor (A) (point (5)) is controlled using the bypass control valve (K) (Figure 5.a).
- When the HTF temperature at the exit of first packed bed (C1) (point (3)) reaches to the setpoint temperature at the exit of multi packed beds (here it is -5 °C), the second packed bed starts charging together with the first packed bed (C1 and C2) (points 1, 2, 3, 4, 5 to 6), while the bypass control valve (K) controls the temperature of the HTF at the inlet of the HTF compressor at the setpoint temperature (here it is 10 °C). At this stage (See Figure 5.b), the control valve between entries of second and third packed beds (CV2) is closed. The valve between entries of first and second packed beds (CV1), the control valve between exits of first and second packed beds (CV3) and the control valve between exits of second and third packed beds (CV4) are opened. Therefore, the HTF flows via the points (1), (2), (3), (4), (5) and (6). The HTF temperature at the inlet of compressor (A) (point (7)) is controlled using the bypass control valve (K) to be at the setpoint temperature (Figure 5.b).
- When the HTF temperature at the exit of second packed bed (C2) at point (5) reaches to the setpoint temperature at the exit of multi packed beds (here it is -5 °C), the third packed bed starts charging together with the second packed bed (C2 and C3). Figure 5.c shows the charging phase of third packed bed (C3).
- In order to charge the third packed bed (C3), the control valve between exits of first and second packed beds (CV3) is closed. The control valve between entries of first and second packed beds (CV1), the control valve between entries of second and third packed beds (CV2) and the control valve between exits of second and third packed beds (CV4) are opened. Therefore, the HTF flows via the points (1), (2), (3), (4), (6) and (7). The HTF temperature at the inlet of compressor (A) (point (8)) is controlled using the bypass control valve (K) (Figure 5.c). Compressor inlet temperature may be set to 10 °C, lower or higher depending on the purpose.
- Similar procedure applies in case of the connection of fourth (not shown in the figures) or additional packed beds.
- Charging process can either be from top to bottom or from bottom to top.

Figure 6 shows the charging sequences in case of all packed beds connected together in parallel:
- Charging all packed beds (C1, C2 and C3) (points 1, 2, 3, 4, 5, 6, 7 to 8), while the bypass valve controls the temperature of the HTF at the inlet of the HTF compressor to 10 °C. At this stage, all control valves (CV1, CV2, CV3 and CV4) are opened. Therefore, the HTF flows via the points (1), (2), (3), (4), (5), (6), (7) and (8). The HTF temperature at the inlet of compressor (A) is controlled using the bypass control valve (K) (Figure 6).
- When the HTF temperature at point (7) reaches to the setpoint temperature at the exit of multi packed beds (here it is -5 °C), the charging phase is stopped.
- Charging sequences in case of all packed beds connected together in parallel shown in Figure 6 can also be in serial order (points 1, 2, 5, 3, 6, 4, 7, 8) instead of parallel order. In this case, additional connection pipes are required (i.e. the exit of first packed bed to the entry of second packed bed as well as the exit of second packed bed to the entry of third packed bed). The HTF temperature at the inlet of compressor (A) (point (8)) is controlled using the bypass control valve (K). It should be mentioned here that the charging phase in series (C1, C2 and C3) will result in higher pressure losses in the system.

During discharging phase, illustrated in Figure 7, the heat transfer fluid is compressed by the HTF compressor (A) (point (1)). Figure 7.1 shows that the exit HTF temperature at point (3) without the bypass system is very low at the start and increases over the course of the discharging phase due the temperature increases in the cold storage system. Using the bypass control valve (L), the exit HTF temperature at point (3) is kept constant at the setpoint temperature of the heat exchanger for cooling purposes. Here, part of the pressurized HTF enters the packed bed system from the top and exits from the bottom (point (2)), while the remaining part of the pressurized HTF is bypassed to point (3). The bypassed mass flow rate of the HTF through the bypass control valve (L) is controlled, so that the temperature of the HTF at the inlet of the heat exchanger coil is maintained to the setpoint temperature of the heat exchanger for cooling purposes (here it is 16 °C) during discharging phase (this setpoint temperature can be selected higher or lower according to user). A fan blows air with ambient temperature of 50 °C over the coils to deliver cooling to the end user (the ambient temperature can be lower or higher). At the outlet of the heat exchanger coil, the temperature of the HTF (point (4)) is similar to ambient temperature. When the temperature of the HTF at the outlet of the packed bed system (point (2)) reaches to the setpoint temperature of the heat exchanger for cooling purposes (here it is 16 °C), the discharge phase is stopped. The HTF mass flow rate during the discharging phase depends on the HTF compressor and the pressure losses raised in the system. Generally, the system can be discharged with much higher mass flow rates of the HTF compared to charging phase. This is of high relevance to provide high quantity of cold air during peak hours.

Figure 8 shows the sequence of discharging phase as follows:
- Discharging the third packed bed (C3) (points 1, 2 to 3), while the bypass control valve (L) controls the temperature of the HTF at the inlet of the heat exchanger coil of 16 °C. In order to discharge the third packed bed (C3), the discharge control valves at the exit of first packed bed (C1) (DCV1), at the exit of second packed bed (C2) (DCV2), between the inlets of first and second packed beds (C1 and C2) (DCV4) and between the inlets of second and third packed beds (C2 and C3) (DCV5) are closed. The discharge control valve at the exit of third packed bed (C3) (DCV3) and the valve between the exits of packed beds (C1, C2 and C3) and heat exchanger coil (D) (DCV6) are opened. Therefore, the HTF flows from the HTF compressor (A) to heat exchanger coil (D) via the points (1), (2) and (3). During discharging the third packed bed (C3), the temperature at point (3) is kept constant to the setpoint temperature of the heat exchanger for cooling purposes using the bypass control valve (L) (Figure 8.a). Here, the exit temperature at point (3) is 16 °C, but it may be higher or lower according to the implementing conditions. When the HTF temperature at the outlet of third packed bed (C3) (point (2)) reaches to the setpoint temperature of the heat exchanger for cooling purposes (16 °C), the discharging of the third packed is stopped and the discharging of the second packed bed starts.
- Discharging the second packed bed (points 1, 2 to 3), while the bypass valve (L) controls the temperature of the HTF at the inlet of the heat exchanger coil to be to the setpoint temperature of the heat exchanger for cooling purposes (here it is 16 °C). In order to discharge the second packed bed (C2), the discharge control valves at the exit of first packed bed (C1) (DCV1), at the exit of third packed bed (C3) (DCV3) and between the inlets of first and second packed beds (C1 and C2) (DCV4) are closed. The discharge control valves at the exit of second packed bed (C2) (DCV2), between the inlets of second and third packed beds (C2 and C3) (DCV5) and the valve between the exits of packed beds (C1, C2 and C3) and heat exchanger coil (D) (DCV6) are opened. Therefore, the HTF flows from the HTF compressor (A) to heat exchanger coil (D) via the points (1), (2) and (3). During discharging the second packed bed (C2), the temperature at point (3) is kept constant to be the setpoint temperature of the heat exchanger for cooling purposes (here it is 16 °C, but may be higher or lower according to the implementing conditions) using the bypass control valve (L) (Figure 8.b). When the HTF temperature at the outlet of second packed bed (C2) (point (2)) reaches to the setpoint temperature of the heat exchanger for cooling purposes (16 °C), the discharging of the second packed is stopped.
- In order to discharge the first packed bed (C1), the discharge control valves at the exit of first packed bed (C1) (DCV1), at the exit of second packed bed (C2) (DCV2) and at the exit of third packed bed (C3) (DCV3) are closed. The discharge control valves between the inlets of first and second packed beds (C1 and C2) (DCV4), between the inlets of second and third packed beds (C2 and C3) (DCV5) and the valve between the exits of packed beds (C1, C2 and C3) and heat exchanger coil (D) (DCV6) are opened. Therefore, the HTF flows from the HTF compressor (A) to heat exchanger coil (D) via the points (1) and (2). During discharging the first packed bed (C1), the temperature at point (2) is kept constant to be the setpoint temperature of the heat exchanger for cooling purposes (here it is 16 °C), may be higher or lower according to the implementing conditions) using the bypass control valve (L) (Figure 8.c). When the HTF temperature at the outlet of first packed bed (C1) (point (2)) reaches to be the setpoint temperature of the heat exchanger for cooling purposes (16 °C), the discharging of the first packed is stopped.
- Similar procedure applies to additional packed beds.
- Discharging can either be from bottom to top or from top to bottom.

### GENERAL EXPLANATION OF THE INVENTION

The pressurised, low/ultra-low temperature, single or multi-packed bed cold storage system for central air conditioning, other cooling requirements or as energy storage system for renewable energy sources comprises a chiller (cooling source) (B) for cooling the heat transfer fluid (HTF) to low or ultra-low temperature, a multi-packed bed system (cold storage) (C) for storing coldness, the HTF compressor (A) enabling the circulation of the HTF in the closed circuit that operated under high-pressure and the heat exchanger coil (delivering of coldness to user) (D) (Figure 2).

At the starting phase (before initiating the system) the setpoints (for temperatures and operation pressure) which are:
- Charging setpoint temperature at the outlet of chiller (Setpoint temperature for chiller),
- Setpoint temperature at the exit of every packed bed (Setpoint temperature for bottom of each packed bed during charging mode),
- Setpoint temperature at the inlet of the HTF compressor,
- Setpoint pressure of the HTF compressor (setpoint pressure),
- Setpoint temperature at the heat exchanger for delivering cooling to the user (Setpoint temperature of the heat exchanger for cooling purposes)
are set to the predetermined values.

During charging phase, the heat transfer fluid is compressed by the HTF compressor (A) (point (1)); the pressurized HTF enters the chiller (B), where its temperature decreases to the setpoint temperature for chiller (point (2)); the cold and pressurized HTF enters the multi-packed bed system (C) from the bottom and exit from the top; at the outlet of the multi-packed bed system (point (3)), the HTF flows to the HTF compressor; the charging phase is stopped, when the temperature of the HTF at the top of the multi-packed bed system (point (3)) reaches the setpoint temperature at exit of packed bed; if no bypass is applied, the HTF temperature at the exit of the multi-packed bed system at point (3) is high at the start and declines over the course of the charging phase due the temperature decrease in the multi packed bed. (Figure 3)

During charging phase, when bypass control valve (K) is applied in between the exit of chiller (B) and the exit of multi packed bed system (C) and the exit of HTF compressor (A) for keeping the HTF temperature at the inlet of HTF compressor (A) as setpoint temperature. (Figure 4)

When more than one packed beds connected together are used; in charging of the packed beds;
- The first packed bed (C1) is charged between (points 1, 2, 3, 4 to 5) (Figure 5.a) as below;
   the control valve between entries of first and second packed beds (CV1) and the control valve between entries of second and third packed beds (CV2) are closed; the control valves between exits of first and second packed beds (CV3) and between the exits of second and third packed beds (CV4) are opened; (Figure 5.a)
   the HTF passes from first packed bed (C1) and flows via the points (1), (2), (3), (4) and (5); (Figure 5.a)
   at this stage, the HTF temperature at the inlet of compressor (A) (point (5)) is controlled by the bypass control valve (K) to be at the setpoint temperature at the inlet of HTF compressor (A) (Figure 5.a);
- When the HTF temperature at the exit of first packed bed (C1) (point (3)) reaches to the setpoint temperature at the exit of multi packed beds, the second packed bed starts charging with the first packed bed (C1 and C2) (points 1, 2, 3, 4, 5 to 6) (Figure 5.b);
   at this stage, the control valve between entries of second and third packed beds (CV2) is closed; the valve between entries of first and second packed beds (CV1), the control valve between exits of first and second packed beds (CV3) and the control valve between exits of second and third packed beds (CV4) are opened; the HTF flows in the first and second packed beds (C1 and C2) via the points (1), (2), (3), (4), (5) and (6); the HTF temperature at the inlet of compressor (A) (point (7)) is controlled using the bypass control valve (K) to be at the setpoint temperature; when the HTF temperature at the exit of second packed bed (C2) at point (5) reaches to the setpoint temperature at the exit of multi packed beds, the charging phase is stopped (Figure 5.b).
- In case of the connection of a third packed bed (C3); for charging the third packed bed (C3), the control valve between exits of first and second packed beds (CV3) is closed; the control valve between entries of first and second packed beds (CV1), the control valve between entries of second and third packed beds (CV2) and the control valve between exits of second and third packed beds (CV4) are opened; the HTF flows in the second and third packed beds (C2 and C3) via the points (1), (2), (3), (4), (6) and (7); the HTF temperature at the inlet of compressor (A) (point (8)) is controlled using the bypass control valve (K) to be at the set point temperature (Figure 5.c).
- In case of the connection of a further packed bed; for charging the last packed bed, the control valves of previous packed beds except last two are closed; the control valves of last two packed beds are opened; the HTF flows in the last packed bed and the one before last packed bed; the HTF temperature at the inlet of compressor (A) is controlled using the bypass control valve (K) to be at the set point temperature.

When all packed beds connected together in parallel (Figure 6);
- Charging all packed beds (C1, C2 and C3) (points 1, 2, 3, 4, 5, 6, 7 to 8), while the bypass valve controls the temperature of the HTF at the inlet of the HTF compressor (A) to be at the setpoint temperature; at this stage, all control valves (CV1, CV2, CV3 and CV4) are opened; the HTF flows via the points (1), (2), (3), (4), (5), (6) and (7). The HTF temperature at the inlet of compressor (A) is controlled using the bypass control valve (K) (Figure 6);
   When the HTF temperature at point (7) reaches to the setpoint temperature at the exit of multi packed beds, the charging phase is stopped (Figure 6).

When all packed beds are connected together in serial order instead of parallel order; in this case, additional connection pipes that connecting the exit of first packed bed to the entry of second packed bed as well as the exit of second packed bed to the entry of third packed bed is used. The HTF temperature at the inlet of compressor (A) (point (8)) is controlled using the bypass control valve (K).

The charging process can either be from top to bottom or from bottom to top for the single or multi-packed bed cold storage system developed in this invention.

During discharging phase (Figure 7).
the heat transfer fluid is compressed by the HTF compressor (A) (point (1));
part of the pressurized HTF enters the packed bed system from the top and exits from the bottom (point (2)), while the remaining part of the pressurized HTF is bypassed to point (3);
the bypassed mass flow rate of the HTF through the bypass control valve (L) is controlled, so that the temperature of the HTF at the inlet of the heat exchanger coil is maintained to the setpoint temperature of the heat exchanger for cooling purposes;
a fan blows air with ambient temperature; at the outlet of the heat exchanger coil, the temperature of the HTF (point (4)) is similar to ambient temperature;
when the temperature of the HTF at the outlet of the packed bed system (point (2)) reaches to the setpoint temperature of the heat exchanger for cooling purposes, the discharge phase is stopped (Figure 7).

When more than one packed beds connected together are used (Figure 8);
- During discharging the third packed bed (C3) (points 1, 2 to 3) (Figure 8.a),
   the bypass control valve (L) controls the temperature of the HTF at the inlet of the heat exchanger coil;
   the discharge control valves at the exit of first packed bed (C1) (DCV1), at the exit of second packed bed (C2) (DCV2), between the inlets of first and second packed beds (C1 and C2) (DCV4) and between the inlets of second and third packed beds (C2 and C3) (DCV5) are closed;
   the discharge control valve at the exit of third packed bed (C3) (DCV3) and the valve between the exits of packed beds (C1, C2 and C3) and heat exchanger coil (D) (DCV6) are opened;
   the HTF flows from the HTF compressor (A) to heat exchanger coil (D) via the points (1), (2) and (3); during discharging the third packed bed (C3), the temperature at point (3) is kept constant to the setpoint temperature of the heat exchanger for cooling purposes using the bypass control valve (L);
   when the HTF temperature at the outlet of third packed bed (C3) (point (2)) reaches to the setpoint temperature of the heat exchanger for cooling purposes, the discharging of the third packed is stopped and the discharging of the second packed bed starts.
- During discharging the second packed bed (points 1, 2 to 3) (Figure 8.b),
   the bypass valve (L) controls the temperature of the HTF at the inlet of the heat exchanger coil to be to the setpoint temperature of the heat exchanger for cooling purposes;
   the discharge control valves at the exit of first packed bed (C1) (DCV1), at the exit of third packed bed (C3) (DCV3) and between the inlets of first and second packed beds (C1 and C2) (DCV4) are closed;
   the discharge control valves at the exit of second packed bed (C2) (DCV2), between the inlets of second and third packed beds (C2 and C3) (DCV5) and the valve between the exits of packed beds (C1, C2 and C3) and heat exchanger coil (D) (DCV6) are opened;
   the HTF flows from the HTF compressor (A) to heat exchanger coil (D) via the points (1), (2) and (3);
   during discharging the second packed bed (C2), the temperature at point (3) is kept constant to be the setpoint temperature of the heat exchanger for cooling purposes using the bypass control valve (L);
   when the HTF temperature at the outlet of second packed bed (C2) (point (2)) reaches to the setpoint temperature of the heat exchanger for cooling purposes, the discharging of the second packed is stopped.
- In order to discharge the first packed bed (C1) (Figure 8.c),
   the discharge control valves at the exit of first packed bed (C1) (DCV1), at the exit of second packed bed (C2) (DCV2) and at the exit of third packed bed (C3) (DCV3) are closed;
   the discharge control valves between the inlets of first and second packed beds (C1 and C2) (DCV4), between the inlets of second and third packed beds (C2 and C3) (DCV5) and the valve between the exits of packed beds (C1, C2 and C3) and heat exchanger coil (D) (DCV6) are opened;
   the HTF flows from the HTF compressor (A) to heat exchanger coil (D) via the points (1) and (2);
   during discharging the first packed bed (C1), the temperature at point (2) is kept constant to be the setpoint temperature of the heat exchanger for cooling purposes using the bypass control valve (L);
   when the HTF temperature at the outlet of first packed bed (C1) (point (2)) reaches to be the setpoint temperature of the heat exchanger for cooling purposes (here it is 16 °C), the discharging of the first packed is stopped.

The discharging process can either be from top to bottom or from bottom to top for the single or multi-packed bed cold storage system developed in this invention.

Each packed bed of the single or multi-packed bed cold storage system developed in this invention is randomly filled with filling materials as monodisperse and/or polydisperse solid particles.

The filling materials of each packed bed of the single or multi-packed bed cold storage system developed in this invention may be made of aluminium oxide, steel or ceramic or *other solid particles that include fluid inside such as phase change material (PCM)* and/or small objects like Raschig rings.

The filling materials of each packed bed of the single or multi-packed bed cold storage system developed in this invention may be mixture of two or more of aluminium oxide, steel or ceramic or *other solid particles that include fluid inside such as phase change material (PCM)* and/or small objects like Raschig rings.

The single or multi-packed bed system developed in this invention may be placed outside of the buildings vertically or horizontally and/or in the ground (underground) and/or may also be movable.

The HTF fluid of the single or multi-packed bed system developed in this invention may be carbon dioxide, nitrogen, dried air or other suitable gases.

## Claims

1. A pressurised, low/ultra-low temperature, single or multi-packed bed cold storage system for central air conditioning, other cooling requirements or as energy storage system for renewable energy sources comprising a chiller (cooling source) (B) for cooling the heat transfer fluid (HTF) to low or ultra-low temperature, a multi-packed bed system (cold storage) (C) for storing coldness, the HTF compressor (A) enabling the circulation of the HTF in the closed circuit that operated under high-pressure and the heat exchanger coil (delivering of coldness to user) (D) characterizing that,
Setpoints (for temperatures and operation pressure) which are:
• Charging setpoint temperature at the outlet of chiller (Setpoint temperature for chiller),
• Setpoint temperature at the exit of every packed bed (Setpoint temperature for bottom of each packed bed during charging mode),
• Setpoint temperature at the inlet of the HTF compressor,
• Setpoint pressure of the HTF compressor (setpoint pressure),
• Setpoint temperature at the heat exchanger for delivering cooling to the user (Setpoint temperature of the heat exchanger for cooling purposes)
are set to the predetermined values before initiating the system.
During charging phase, the heat transfer fluid is compressed by the HTF compressor (A) (point (1)); the pressurized HTF enters the chiller (B), where its temperature decreases to the setpoint temperature for chiller (point (2)); the cold and pressurized HTF enters the multi-packed bed system (C) from the bottom and exit from the top; at the outlet of the multi-packed bed system (point (3)), the HTF flows to the HTF compressor; the charging phase is stopped, when the temperature of the HTF at the top of the multi-packed bed system (point (3)) reaches the setpoint temperature at exit of packed bed; if no bypass is applied, the HTF temperature at the exit of the multi-packed bed system at point (3) is high at the start and declines over the course of the charging phase due the temperature decrease in the multi packed bed.

2. A pressurised, low/ultra-low temperature, single or multi-packed bed cold storage system for central air conditioning, other cooling requirements or as energy storage system for renewable energy sources as claimed in claim 1, when bypass control valve (K) is applied in between the exit of chiller (B) and the exit of multi packed bed system (C) and the exit of HTF compressor (A) for keeping the HTF temperature at the inlet of HTF compressor (A) as setpoint temperature.

3. A pressurised, low/ultra-low temperature, multi-packed bed cold storage system for central air conditioning, other cooling requirements or as energy storage system for renewable energy sources as claimed in claim 1 or 2, when more than one packed beds connected together are used;
• During charging the first packed bed (C1) (points 1, 2, 3, 4 to 5), the control valve between entries of first and second packed beds (CV1) and the control valve between entries of second and third packed beds (CV2) are closed; the control valves between exits of first and second packed beds (CV3) and between the exits of second and third packed beds (CV4) are opened; the HTF passes from first packed bed (C1) and flows via the points (1), (2), (3), (4) and (5); at this stage, the HTF temperature at the inlet of compressor (A) (point (5)) is controlled by the bypass control valve (K) to be at the setpoint temperature at the inlet of HTF compressor (A);
• When the HTF temperature at the exit of first packed bed (C1) (point (3)) reaches to the setpoint temperature at the exit of multi packed beds, the second packed bed starts charging with the first packed bed (C1 and C2) (points 1, 2, 3, 4, 5 to 6); at this stage, the control valve between entries of second and third packed beds (CV2) is closed; the valve between entries of first and second packed beds (CV1), the control valve between exits of first and second packed beds (CV3) and the control valve between exits of second and third packed beds (CV4) are opened; the HTF flows in the first and second packed beds (C1 and C2) via the points (1), (2), (3), (4), (5) and (6); the HTF temperature at the inlet of compressor (A) (point (7)) is controlled using the bypass control valve (K) to be at the setpoint temperature; when the HTF temperature at the exit of second packed bed (C2) at point (5) reaches to the setpoint temperature at the exit of multi packed beds, the charging phase is stopped.
• In case of the connection of a third packed bed (C3); for charging the third packed bed (C3), the control valve between exits of first and second packed beds (CV3) is closed; the control valve between entries of first and second packed beds (CV1), the control valve between entries of second and third packed beds (CV2) and the control valve between exits of second and third packed beds (CV4) are opened; the HTF flows in the second and third packed beds (C2 and C3) via the points (1), (2), (3), (4), (6) and (7); the HTF temperature at the inlet of compressor (A) (point (8)) is controlled using the bypass control valve (K) to be at the set point temperature.
• In case of the connection of a further packed bed; for charging the last packed bed, the control valves of previous packed beds except last two are closed; the control valves of last two packed beds are opened; the HTF flows in the last packed bed and the one before last packed bed; the HTF temperature at the inlet of compressor (A) is controlled using the bypass control valve (K) to be at the set point temperature.

4. A pressurised, low/ultra-low temperature, multi-packed bed cold storage system for central air conditioning, other cooling requirements or as energy storage system for renewable energy sources as claimed in any one of the previous claims, when all packed beds connected together in parallel;
• Charging all packed beds (C1, C2 and C3) (points 1, 2, 3, 4, 5, 6, 7 to 8), while the bypass valve controls the temperature of the HTF at the inlet of the HTF compressor (A) to be at the setpoint temperature; at this stage, all control valves (CV1, CV2, CV3 and CV4) are opened; the HTF flows via the points (1), (2), (3), (4), (5), (6) and (7). The HTF temperature at the inlet of compressor (A) is controlled using the bypass control valve (K);
• When the HTF temperature at point (7) reaches to the setpoint temperature at the exit of multi packed beds, the charging phase is stopped.

5. A pressurised, low/ultra-low temperature, multi-packed bed cold storage system for central air conditioning, other cooling requirements or as energy storage system for renewable energy sources as claimed in any one of the previous claims, all packed beds may be connected together in serial order instead of parallel order; in this case, additional connection pipes that connecting the exit of first packed bed to the entry of second packed bed as well as the exit of second packed bed to the entry of third packed bed is used; the HTF temperature at the inlet of compressor (A) (point (8)) is controlled using the bypass control valve (K).

6. A pressurised, low/ultra-low temperature, single or multi-packed bed cold storage system for central air conditioning, other cooling requirements or as energy storage system for renewable energy sources as claimed in any one of the previous claims, the charging process can either be from top to bottom or from bottom to top.

7. A pressurised, low/ultra-low temperature, single or multi-packed bed cold storage system for central air conditioning, other cooling requirements or as energy storage system for renewable energy sources as claimed in any one of the previous claims;
During discharging phase, the heat transfer fluid is compressed by the HTF compressor (A) (point (1)); part of the pressurized HTF enters the packed bed system from the top and exits from the bottom (point (2)), while the remaining part of the pressurized HTF is bypassed to point (3); the bypassed mass flow rate of the HTF through the bypass control valve (L) is controlled, so that the temperature of the HTF at the inlet of the heat exchanger coil is maintained to the setpoint temperature of the heat exchanger for cooling purposes; a fan blows air with ambient temperature; at the outlet of the heat exchanger coil, the temperature of the HTF (point (4)) is similar to ambient temperature; when the temperature of the HTF at the outlet of the packed bed system (point (2)) reaches to the setpoint temperature of the heat exchanger for cooling purposes, the discharge phase is stopped.

8. A pressurised, low/ultra-low temperature, multi-packed bed cold storage system for central air conditioning, other cooling requirements or as energy storage system for renewable energy sources as claimed in claim 1 or 2, when more than one packed beds connected together are used;
• During discharging the third packed bed (C3) (points 1, 2 to 3), the bypass control valve (L) controls the temperature of the HTF at the inlet of the heat exchanger coil; the discharge control valves at the exit of first packed bed (C 1) (DCV1), at the exit of second packed bed (C2) (DCV2), between the inlets of first and second packed beds (C1 and C2) (DCV4) and between the inlets of second and third packed beds (C2 and C3) (DCV5) are closed; the discharge control valve at the exit of third packed bed (C3) (DCV3) and the valve between the exits of packed beds (C1, C2 and C3) and heat exchanger coil (D) (DCV6) are opened; the HTF flows from the HTF compressor (A) to heat exchanger coil (D) via the points (1), (2) and (3); during discharging the third packed bed (C3), the temperature at point (3) is kept constant to the setpoint temperature of the heat exchanger for cooling purposes using the bypass control valve (L); when the HTF temperature at the outlet of third packed bed (C3) (point (2)) reaches to the setpoint temperature of the heat exchanger for cooling purposes, the discharging of the third packed is stopped and the discharging of the second packed bed starts.
• During discharging the second packed bed (points 1, 2 to 3), the bypass valve (L) controls the temperature of the HTF at the inlet of the heat exchanger coil to be to the setpoint temperature of the heat exchanger for cooling purposes; the discharge control valves at the exit of first packed bed (C1) (DCV1), at the exit of third packed bed (C3) (DCV3) and between the inlets of first and second packed beds (C1 and C2) (DCV4) are closed; the discharge control valves at the exit of second packed bed (C2) (DCV2), between the inlets of second and third packed beds (C2 and C3) (DCV5) and the valve between the exits of packed beds (C1, C2 and C3) and heat exchanger coil (D) (DCV6) are opened; the HTF flows from the HTF compressor (A) to heat exchanger coil (D) via the points (1), (2) and (3); during discharging the second packed bed (C2), the temperature at point (3) is kept constant to be the setpoint temperature of the heat exchanger for cooling purposes using the bypass control valve (L); when the HTF temperature at the outlet of second packed bed (C2) (point (2)) reaches to the setpoint temperature of the heat exchanger for cooling purposes, the discharging of the second packed is stopped.
• In order to discharge the first packed bed (C1), the discharge control valves at the exit of first packed bed (C1) (DCV1), at the exit of second packed bed (C2) (DCV2) and at the exit of third packed bed (C3) (DCV3) are closed; the discharge control valves between the inlets of first and second packed beds (C1 and C2) (DCV4), between the inlets of second and third packed beds (C2 and C3) (DCV5) and the valve between the exits of packed beds (C1, C2 and C3) and heat exchanger coil (D) (DCV6) are opened; the HTF flows from the HTF compressor (A) to heat exchanger coil (D) via the points (1) and (2); during discharging the first packed bed (C1), the temperature at point (2) is kept constant to be the setpoint temperature of the heat exchanger for cooling purposes using the bypass control valve (L); when the HTF temperature at the outlet of first packed bed (C1) (point (2)) reaches to be the setpoint temperature of the heat exchanger for cooling purposes (here it is 16 °C), the discharging of the first packed is stopped.

9. A pressurised, low/ultra-low temperature, single or multi-packed bed cold storage system for central air conditioning, other cooling requirements or as energy storage system for renewable energy sources as claimed in any one of the previous claims, discharging can be from bottom to top or from top to bottom.

10. A pressurised, low/ultra-low temperature, single or multi-packed bed cold storage system for central air conditioning, other cooling requirements or as energy storage system for renewable energy sources as claimed in any one of the previous claims, each packed bed is randomly filled with filling materials as monodisperse and/or polydisperse solid particles.

11. A pressurised, low/ultra-low temperature, single or multi-packed bed cold storage system for central air conditioning, other cooling requirements or as energy storage system for renewable energy sources as claimed in any one of the previous claims, the filling materials may be made of aluminium oxide, steel or ceramic or *other solid particles that include fluid inside such as phase change material (PCM)* and/or small objects like Raschig rings.

12. A pressurised, low/ultra-low temperature, single or multi-packed bed cold storage system for central air conditioning, other cooling requirements or as energy storage system for renewable energy sources as claimed in any one of the previous claims, the filling materials may be mixture of two or more of aluminium oxide, steel or ceramic or *other solid particles that include fluid inside such as phase change material (PCM)* and/or small objects like Raschig rings.

13. A pressurised, low/ultra-low temperature, single or multi-packed bed cold storage system for central air conditioning, other cooling requirements or as energy storage system for renewable energy sources as claimed in any one of the previous claims, the multi-packed bed system may be placed outside of the buildings vertically or horizontally and/or in the ground (underground) and/or may also be movable.

14. A pressurised, low/ultra-low temperature, single or multi-packed bed cold storage system for central air conditioning, other cooling requirements or as energy storage system for renewable energy sources as claimed in any of the previous claims the HTF fluid may be carbon dioxide, nitrogen, dried air or other suitable gases.
